Europäisches Patentamt

European Patent Office

Office européen des brevets

(11) Publication number: **0 466 244 A1**

# EUROPEAN PATENT APPLICATION

(21) Application number: **91201682.1**

(22) Date of filing: **02.07.91**

(51) Int. Cl.⁵: **A23L 3/3571**, A23B 4/22, A23C 19/06

(30) Priority: **13.07.90 EP 90307694**

(43) Date of publication of application:
**15.01.92 Bulletin 92/03**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE DK ES FR GR IT LI NL SE AT**

Applicant: **UNILEVER PLC**
**Unilever House Blackfriars**
**London EC4P 4BO(GB)**

(84) **GB**

(72) Inventor: **Anderson, Wayne Arfon**
**Unilever Research Colworth Lab., Colworth**
**House**
**Sharnbrook, Bedford MK44 1LO(GB)**
Inventor: **Cole, Martin Barry**
**Unilever Research Colworth Lab., Colworth**
**House**
**Sharnbrook, Bedford MK44 1LO(GB)**
Inventor: **Gould, Graham Warwick**
**Unilever Research Colworth Lab., Colworth**
**House**
**Sharnbrook, Bedford MK44 1LO(GB)**
Inventor: **Jones, Martin Vincent**
**Unilever Research Colworth Lab., Colworth**
**House**
**Sharnbrook, Bedford MK44 1LO(GB)**

(74) Representative: **van der Toorren, Johannes,**
**Drs. et al**
**UNILEVER N.V. Patent Division Postbus 137**
**NL-3130 AC Vlaardingen(NL)**

(54) **Compositions having antibacterial properties and use of such compositions in suppressing growth of microorganisms, eg. Listeria bacteria.**

(57) A mixture of (1) a cell wall lysing substance such as lysozyme, (2) an antibacterial such as the bacteriocin nisin, and (3) citric acid or a salt thereof or another food-grade adjuvant, effectively prevents growth of *Listeria monocytogenes* bacteria. It is also effective against other micro-organisms e.g. *Bacillus* species, lactic acid bacteria.

The main application of this mixture is in connection with the production, packaging and storage of food products and the cleaning of equipment used therefor, but the mixture can also be applied for non-food uses, e.g. animal feedstuffs, cosmetic products, and pharmaceutical products and their production.

The present invention relates to improving the suppression of growth of micro-organisms in various products and/or the safety of such products, in particular to improvements in combatting contamination with *Listeria* bacteria. More in particular it relates to
- a composition having improved antibacterial properties, suitable for combatting microbial, in particular bacterial, contamination of various products;
- the use of such composition
  - - in a process for improving the suppression of growth of micro-organisms in various products and/or the safety of such products;
  - - in a process for treating equipment for handling or processing food products, animal feedstuffs, cosmetic products, or pharmaceutical products, by contacting the equipment with such a composition; and
  - - in a process for improving the safety of packed products by contacting at least part of the packaging material with such a composition; as well as
- a product obtainable by one of these processes.

Background of the invention

In recent years *Listeria monocytogenes* has been associated with human listeriosis transmitted by vegetables, cheese, and pasteurized milk products and is of serious concern as an emerging pathogen in a variety of food products. In the animal world infection can occur through silage, grass or waters.

Use of lysozyme against *Listeria*

- Industrial-scale extraction of lysozyme is carried out from egg white, where it is present in relatively great concentration as described in EP-A-0 184 575 (LABOFINA S.A.), published 11 June 1986.
- In ZA-A-86/7738 (CHEM. SERVICES LTD.), published 13 April 1987, the use of 20-40 ppm lysozyme with 20-40 ppm of the antimycotic agent Pimaricine™, and optionally 80 ppm of $SO_2$ and/or 150-200 ppm of sodium benzoate is described for avoiding spoilage of food products by bacteria and yeasts. No reference is made to any effect on *Listeria.*
- The results of a study by V.L. HUGHEY & E.A. JOHNSON published in Applied and Environmental Microbiology 53 (Sep. 1987) 2165-2170 suggest that lysozyme may be effective in foods as a safety factor to assist in the inhibition of *Listeria monocytogenes* and that the lysis effect is enhanced when lysozyme is used in combination with EDTA or possibly other chelators.
- In EP-A-0 265 884 (SPA SOCIETA' PRODOTTI ANTIBIOTICI S.p.A.), published 4 May 1988, the use of 10-2000 ppm lysozyme, optionally with citric acid or EDTA, in combatting contamination with *Listeria monocytogenes* of foods of animal origin such as pasteurized milk, cheese, frankfurters, and slaughtered chickens was disclosed.
- In DE-A1-3704004 (HOECHST AG), published 18 August 1988, the use of 0.01-2000 units lysozyme/mg food product and a non-enzymatic preserving agent like sorbic acid, benzoic acid, propionic acid, formic acid, p-hydroxybenzoic acid, salicic acid or sulphurous acid, as well organic acids like acetic acid or citric acid for improving the shelf life of food products is described.

Use of bacteriocins against *Listeria*

- D.G. Hoover et al. described in the Journal of Food protection 51 (Jan 1988) 29-31 that a bacteriocin produced by *Pediococcus* was capable of inhibiting the growth of *Listeria monocytogenes* strains ATCC 19111, 19113 and 19115. Such a bacteriocin is marketed as pediocin by MICROLIFE (U.S.A.). The use of pediocin against gram positive bacteria in general and against *Listeria monocytogenes* in particular is claimed in US patents 4,883,673 and 4,929,445, respectively.
- L.J. Harris **et al.** described in the Journal of Food Protection 52 (June 1989) 384-387 that bacteriocins produced by some lactic acid bacteria of dairy, meat, and vegetable origin *Lactobacillus, Leuconostoc, Pediococcus,* and *Lactococcus* were capable of inhibiting the growth of eight strains of *Listeria monocytogenes* including strain ATCC 19115. They state:
  " With recognition of *L. monocytogenes* as a major food-borne pathogen, effective measures must be taken to minimize the contamination of food products. The pathogen has the ability to withstand a large variety of environmental conditions such as refrigeration temperatures, salt concentrations as high as 10%, and pH levels as low as 5.0. *L. monocytogenes* has also been shown to survive the processing and storage of fermented products such as hard salami, cheeses, and fermented milk made from raw materials contaminated with the organism. These observations suggest that traditional food preservation processes may not prevent growth of **L. monocytogenes.** Modified approaches for preservation which will improve food safety and product shelf-life should be explored. "

- One of the bacteriocins produced by lactic acid bacteria has found international acceptance as a food additive. It is known as nisin and is marketed as Nisaplin™ by APLIN & BARRETT (U.K.). According to a brochure on Nisaplin™ of February 1985 the World Health Organisation Committee on Biological Standardisation has established in its 2nd Report, 1970-WHO Technical Report Series No. 444, an international reference preparation of nisin, and the international unit (i.u.) is defined as 0.001 mg of this preparation. The i.u. is identical with the unit of nisin activity of Nisaplin™.

- In prior-filed but not prior-published EP-A-0384319 (VISKASE CORP.), published 29 Aug 1990, the 2-combination of nisin and citric acid or EDTA is described for combatting **Listeria** infections. Also a combination of lysozyme and Na$_2$EDTA is described in Example 52 without being successful and in paper Example III without showing any result. On page 4, line 55 the bacteriocin PA-1 produced at MICROLIFE TECHNICS of Sarasota, Florida (U.S.A.) is mentioned, also referred to as pediocin.

Use of lysozyme and nisin against **Listeria**

- In EP-A2-0374823 (MILES INC.), published 27 june 1990, a 2-combination of lysozyme and nisin is described inhibiting the growth of micro-organisms including **Listeria monocytogenes.** The amounts of lysozyme exemplified varied from 10 to 75 mg/l and of nisin from 10 to 300 i.u./ml. Contrary to the statements in the specification the synergistic effect is only supported for products having a pH of 7 or higher but not for those having a pH of 6.5 and lower.

Summarizing the prior art, it was known

- that either lysozyme alone, or a bacteriocin like pediocin alone has some effect against **Listeria monocytogenes;**
- that 2-combinations of lysozyme plus either EDTA or citric acid may be better than lysozyme alone in combatting **Listeria** contamination of food products; and
- that a 2-combination of lysozyme plus nisin may be better than lysozyme alone or nisin alone in combatting **Listeria** contamination of food products.
  Further, in a prior-filed but not prior-published European patent application of US origin a 2-combination of nisin with either EDTA or citric acid for combatting **Listeria** contamination of food products was described.

Brief summary of the invention

It has been found that an unexpectedly strong synergism exists between the action of the cell wall lysing substance lysozyme, the bacteriocin nisin and the adjuvant citric acid. The three agents together effectively prevent the growth of a number of strains of **Listeria monocytogenes** and also cause death of these bacteria under certain conditions. In several cases the combination is also effective against other micro-organisms among which are **Bacillus** species and lactic acid bacteria.
The three-combination of lysozyme plus nisin plus citric acid was much more effective than any of these ingredients separately and also more effective than either two-combination be it lysozyme with citric acid, nisin with citric acid, or lysozyme with nisin.
The main application of this invention is in connection with the production, packaging and storage of food products and the cleaning of equipment used therefor, but the invention can also be applied for non-food uses, examples of which comprise animal feedstuffs, cosmetic products, and pharmaceutical products and their production.

Detailed description of the invention

In a systematic set of experiments it was found that a combination of three different ingredients, namely lysozyme + nisin + citrate gave a much better inhibiting effect on **Listeria monocytogenes** than either of these ingredients alone or any combination of two of them. Ethylene diamine tetraacetic acid (EDTA) or salts thereof could be applied instead of citric acid.
It is envisaged that not only lysozyme, but also other lysing substances can be used, for example

EP 0 466 244 A1

zymolase, either alone or in combination with lysozyme. The lysing (or lytic) effect of zymolase, which is an endo-$\beta$-(1->3) -glucanase, alone and in combination with lysozyme on yeasts was described by D.Knorr *et al.* in Biotechnology and Bioengineering 21 (1979) 2011-2021.

Instead of nisin other antibacterial compounds, e.g. a bacteriocin such as pediocin, can be used.

For the purpose of this specification a bacteriocin is defined as a polypeptide or derivative thereof produced by a naturally occurring bacterium, or an analogue of such polypeptide or derivative, said bacteriocin being able to inhibit the growth of, or even to kill, other bacteria. The term "derivative" comprises a secondary product produced from a polypeptide. For example, it is known that nisin contains several ring structures following some dehydratations, ring closures and sulphur bridge formations resulting in a structure that is based on a polypeptide backbone, but is not a normal polypeptide. The term analogue means that on the basis of the known structures of nisin and other bacteriocins compounds having analogous structures can be made and tested for their bacteriocin properties. It is within the scope of the present invention to use such analogous bacteriocins as part of the 3-combinations described. A bacteriocin to be used as part of the 3-combinations according to the present invention can be obtained as a "concentrate" obtained from a culture of a naturally occurring bacterium producing the bacteriocin, but it can also be obtained by concentration of, or isolation from, a culture of a transformed micro-organism (be it a bacterium, mould or yeast) capable of producing the bacterium or precursor thereof. The term "concentrate" comprises both a cell concentrate obtained from the culture and an isolated fraction containing the bacteriocin obtained after cracking the cell walls of the bacteria producing the bacteriocin.

Even antimycotics, e.g. PimaricinTM, which are suitable in suppressing growth of moulds and yeasts, are sometimes intensifying the action against *Listeria.* However, according to the invention at least one antibacterial compound need be present in the synergistic composition. Thus an antimycotic may be used, but the composition should also contain an antibacterial compound.

Instead of citric acid as adjuvant other organic acids acceptable for use in food products or preparations for cosmetic use or personal hygiene can be used, such as acetic acid, lactic acid, propionic acid, and tartaric acid or salts of these organic acids. But also phosphates, e.g. orthophosphates, and condensed phosphates, e.g. hexametaphosphates, tripolyphosphates and other polyphosphates, or the corresponding acids, as well as other sequestering agents containing substituted or non-substituted amino groups like nitrilo-triacetic acid (NTA) and EDTA, or salts thereof, can be used as adjuvant.

Thus the invention provides a composition having improved antibacterial properties, which composition comprises a mixture of at least one representative of each of the following groups of compounds

(1) a cell wall lysing substance or its salts,

(2) an antibacterial compound, and

(3) an adjuvant selected from the group consisting of organic acids acceptable for use in food products or preparations for cosmetic use or personal hygiene or salts of these acids, phosphates and condensed phosphates or the corresponding acids, and other sequestering agents.

A commercially available and very suitable food-grade cell wall lysing substance (1) is lysozyme or a salt thereof, which use in a 3-combination according to the invention is therefore preferred.

The preferred antibacterial compound (2) in a 3-combination according to the invention is a bacteriocin selected from the group consisting of nisin, pediocin and mixtures thereof.

The adjuvant (3) can be selected from the group consisting of

(3.1) acetic acid, citric acid, lactic acid, propionic acid and tartaric acid, or salts thereof;

(3.2) orthophosphates, hexametaphosphates, tripolyphosphates and other polyphosphates, or the corresponding acids;

(3.3) sequestering agents containing substituted or non-substituted amino groups, and any mixture thereof.

In order to achieve in the product to be protected against *Listeria* the desired concentrations of the compounds (1), (2) and (3) it is preferred that in the compositions according to the invention the ratio of compounds (1) : (2) : (3) is in the range of from 5 to 2000 mg of (1) : from $5 \times 10^3$ to $5 \times 10^6$ i.u. of nisin equivalent of (2) : from 0.5 to 100 gram of (3).

Depending on the type of product to be protected a more specific preferred ratio of compounds (1) : (2) : (3) is in the range of from 50 to 1000 mg of lysozyme or salt thereof : from $5 \times 10^4$ to $1 \times 10^6$ i.u. of nisin or equivalent thereof : from 5 to 20 gram of citric acid or salt thereof.

The invention also provides a process for improving the suppression of growth of micro-organisms in various products or the safety of such products or both, in particular for combatting contamination with *Listeria* bacteria, in which process an effective amount of a composition according to the invention is incorporated into the product.

If in such a process the composition contains lysozyme or a salt thereof as compound (1) it is preferred

4

that the amount of the composition incorporated into the product is such, that the amount of lysozyme or a salt thereof in the product is in the range of 5 to 2000 mg/kg based on the total weight of the product or in the range of 10 to 200 mg/kg calculated on the total aqueous phase of the product. The actual amount to be used will depend on the other ingredients present and the treatment of the product to be protected against *Listeria* infections, e.g. additional heating or cooling or other treatment decreasing the stability of the micro-organisms.

If the composition used in such a process contains as antibacterial compound (2) nisin, it is preferred that the amount of the composition incorporated into the product is such, that the amount of nisin in the product is in the range of 5 to 5000 international units of nisin per gram of the total product.

Although many compounds are suitable as adjuvants (3) the preference is for food-grade adjuvants selected from the adjuvants mentioned above. The amount of adjuvant (3) added to the product to be protected can vary between wide ranges. For practical purposes the lower limit is about 0.05% by weight of the total product and the upper limit is about 10% by weight of the total product. Suitable adjuvants with their preferred level of application in a food product are: 0.05-0.5% of EDTA or an non-toxic salt thereof, 0.1 to 5% of a phosphate or condensed phosphate or the corresponding acid, 0.5-5% of citric acid or a non-toxic salt thereof. In general the higher percentages can be used in compositions applied for treating equipment for handling or processing food products, such as cutting tables, knives, slicers and the like, or for treating the surfaces of foods and other products.

For practical purposes the pH of a product to be prepared in a process according to the invention is usually at least 4 and preferably at most 7.5, but when the product is used for a non-edible purpose, the pH may be up to 10 or sometimes even higher provided that the enzyme(s) used are still active at such high pH. Thus pH values outside the range of 4-10 are possible, e.g. fruit drinks and milk products can have a lower pH and cleaning compositions can have a higher pH.

In this specification edible or non-edible relates to consumption by both humans and animals.

It has further been found that additional measures can make a process according to the invention even more successful. It was found that a further improvement in obtaining safe products can be obtained with a process in which, in addition to the incorporation of a composition according to the invention, the food product is subjected to a special temperature treatment in order to destabilize any *Listeria* bacteria present. One such treatment is to subject the food product to at least one freeze/thaw cycle, which is applicable to products having freeze/thaw stability. This can give particularly good results when the food product is subsequently stored in frozen condition or at chilled temperature, i.e. below 10°C.

Another such special heat treatment is heating to a temperature of above 40°C, which may be up to 90°C, before storage at a temperature between ambient temperature and minus 30°C. Such additional heat treatment sometimes appeared to be very successful in destabilizing any *Listeria* bacteria present. Heating well above 90°C, to kill all vegetative micro-organisms, is not normally required. However, the present invention is very practical for products that cannot be subjected to such high temperatures because their physical structure is damaged. Thus the present invention can be used to produce products which have undergone mild heat treatments, but which are nevertheless safe due to the incorporation of the inventive combination of one or more cell wall lysing substances and one or more antibacterials and one or more adjuvants.

Preferably the food product, after being subjected to said special temperature treatment, is stored below 0°C.

Although the main embodiment of this invention is directed to food products and their production, it is also applicable to animal feedstuffs, cosmetic products or pharmaceutical products. The lysing substances, antibacterials or adjuvants should be edible when used for foods; for other applications sometimes also non-edible ingredients may be used, although edible compounds are preferred.

The invention also provides a process for treating equipment for handling or processing food products, animal feedstuffs, cosmetic products, or pharmaceutical products, in which process the equipment is contacted with a composition according to the invention, before, during or after the handling or processing of the products to be protected against *Listeria* contamination.

Further the invention provides a process for improving the safety of packed products, in particular for combatting contamination with *Listeria* bacteria, in which at least part of the packaging material is contacted with a composition according to the invention. A preferred embodiment of this aspect of the invention is a process, in which the packaging material is a container to be closed with a lid, and the lid for the container is contacted with the composition shortly before closing the container filled with the product to be protected against *Listeria* contamination.

All these processes can result in a product in which the suppression of growth of micro-organisms and/or its safety, in particular protection against contamination with *Listeria* bacteria, is improved, which

5

product comprises a combination of effective amounts of at least one representative of each of groups (1), (2) and (3):

(1) a cell wall lysing substance or its salts,

(2) an antibacterial compound, and

(3) an adjuvant selected from the group consisting of organic acids acceptable for use in foods or preparations for cosmetic use or personal hygiene or salts thereof, phosphates and condensed phosphates or the corresponding acids, and other sequestering agents.

As indicated above suitable amounts of the components of the 3-combination of the composition in the products according to the invention are (1) from 5 to 2000 mg cell wall lysing substance per kg of product, (2) from 5 to 5000 international units of nisin or the equivalent thereof per gram of product, and (3) from 0.05 to 10% by weight of the total product of adjuvant.

A preferred combination for products containing an aqueous phase is one that results in a product containing (1) from 10 to 200 mg cell wall lysing substance per kg of total aqueous phase of the product, (2) from 50 to 1000 international units of nisin, or the equivalent thereof, per gram of product, and (3) from 0.05 to 3% by weight of the total product of adjuvant.

By way of illustration several embodiments of the invention are given in the following Examples without being limited thereto.

The nisin used was ex Sigma, catalog nr. N-5764 in Examples 1, 2 and 3 and ex Aplin & Barrett in Examples 4, 5 and 6; the lysozyme used was ex Sigma, catalog nr. L-6876; citric acid monohydrate was Analar grade ex BDH. In this specification percentages and amounts are by weight unless otherwise specified.

Example 1

Prevention of growth of *Listeria monocytogenes* by lysozyme plus nisin in citrate-containing tryptone phosphate broth incubated at 30° C

| Addition | Rise in optical density after incubation for .. hours: | | | |
|---|---|---|---|---|
| | 12 | 24 | 48 | 96 |
| Control—no addition | 0.02 | 0.30 | 0.25 | 0.20 |
| Citrate (1%) | 0 | 0.17 | 0.27 | 0.23 |
| Citrate (1%) + lysozyme (100 μg/ml) | 0 | 0.19 | 0.27 | 0.23 |
| Citrate (1%) + nisin (100 i.u./ml) | 0 | 0.01 | 0.23 | 0.12 |
| Lysozyme (100 μg/ml) + nisin (100 i.u./ml) | 0 | 0 | 0.22 | 0.12 |
| Citrate (1%) + lysozyme (100 μg/ml) + nisin (100 i.u./ml) | 0 | 0 | 0 | 0 |

The data given shows the rises in optical density measured in a Lab Systems 'Bioscreen', that indicate the extent to which growth has occurred. Thus higher numbers indicate more growth of micro-organisms.

Tryptone phosphate broth containing 4% sodium chloride was inoculated with *L. monocytogenes* strain ATCC 19115 at an initial concentration of about $10^3$ cells per ml, along with the additions as indicated prior to incubation. The citrate was added as 1% w/v citric acid monohydrate. All cultures were adjusted to pH 6.2 by the addition of sodium hydroxide.

The data given in this Example illustrates the strong synergism displayed when the lysozyme, nisin and citric acid are present together.

Example 2

Additional effect of freeze-thawing on the inhibition of growth of *Listeria monocytogenes* by lysozyme plus nisin in citrate-containing tryptone phosphate broth at 30° C

| Treatment | Rise in optical density after incubation for .. hours: | | | |
|---|---|---|---|---|
| | 12 | 24 | 48 | 96 |
| **-a-  Controls – no addition:** | | | | |
| Unfrozen | 0.07 | 0.29 | 0.23 | 0.18 |
| Freeze-thawed | 0 | 0.28 | 0.23 | 0.19 |
| **-b-  1% Citrate + 50 $\mu$g/ml lysozyme + 100 i.u./ml nisin:** | | | | |
| Unfrozen | 0 | 0 | 0.01 | 0.14 |
| Freeze-thawed | 0 | 0 | 0 | 0 |

Conditions as in Example 1 except that the 'freeze-thawed' cells were held at -20° C for 16 hours in broth containing the additions as indicated, then thawed at 30° C temperature before incubation.

The data given in this Example illustrates the inhibitory effect of the lysozyme-nisin-citrate mixture and the additional inhibition resulting from the freeze-thaw treatment.

Example 3

Inactivation of different strains of *Listeria monocytogenes* by lysozyme plus nisin in citrate-containing tryptone phosphate broth at different temperatures.

| Strain | Temperature (°C) | Reduction in cell numbers ($\log_{10}$) following incubation for 200 minutes in the presence of: | |
|---|---|---|---|
| | | 100 $\mu$g/ml Lysozyme + 100 i.u./ml nisin | 1000 $\mu$g/ml Lysozyme + 500 i.u./ml nisin |
| Scott A | 5 | 0 | 0 |
| " | 10 | 0.19 | 0.46 |
| " | 25 | 0.20 | 3.10 |
| 19115 | 5 | 0.51 | 1.70 |
| " | 10 | 0.11 | 1.70 |
| " | 25 | 0.07 | 2.30 |
| "Cocktail" | 5 | 0 | 0.70 |
| " | 10 | 0.26 | 2.32 |
| " | 25 | 0.50 | 4.10 |

The data given shows the reduction in colony-forming units. The "cocktail" contained strains ATCC 19115, Scott A, plus 7 isolates from food associated environments.

Tryptone phosphate broth containing 0.5%, sodium chloride was inoculated at initial concentrations of about $10^9$ cells per ml with various strains of *L. monocytogenes,* as indicated, along with the lysozyme-nisin mixtures and citric acid (1% w/v). Media were adjusted to pH 6.0 by the addition of sodium hydroxide.

A reduction in cell number ($\log_{10}$) of 2 means a 100 fold reduction ($= 10^2$).

This Example shows that the combination lysozyme-nisin-citric acid inactivated the *Listeria* bacteria, and more effectively at the higher than at the lower temperatures.

Example 4

Example 3 was repeated with strain Scott A only, but higher temperatures were applied. The pH was adjusted to 6 as in Example 3.

Temp. Reduction in cell numbers ($log_{10}$) following incubation for (x) minutes in the presence of:

| Temp. (°C) | Control | 100 µg/ml Lysozyme + 100 i.u./ml nisin + 1 % citric acid | | 1000 µg/ml Lysozyme + 500 i.u./ml nisin + 1% citric acid |
|---|---|---|---|---|
| | 60 minutes | 60 minutes | 240 minutes | 60 minutes |
| 10 | 1.3 | – | – | 3.5 |
| 25 | – | – | – | 5.0 |
| 37 | 1.3 | 3.6 | 4.1 | 5.7 |
| 45 | 0.0 | 4.9 | – | 5.4 |
| 50 | 0.8 | 5.6 | >6.0 | >6.0 |
| 55 | 4.0 | >6.0 | >6.0 | >6.0 |

The data given shows an increased killing effect of the *Listeria* bacteria at higher temperatures by the combination of lysozyme plus nisin plus citrate. The control, not containing any of these three ingredients, showed a much lower reduction in cell numbers compared with the use of the inventive combination.

Example 5

Prevention of growth of *Listeria monocytogenes* and spoilage micro-organisms in liver pate by lysozyme plus nisin in the presence of citrate.

| Additions | Bacterial count ($log_{10}$ number/g) after incubation for 24 h at 30°C | |
|---|---|---|
| | *Listeria monocytogenes* | Total bacteria |
| Control = no addition | 7.7 | 7.4 |
| Lysozyme (100 µg/g) | 7.2 | 7.3 |
| Nisin (100 i.u./g) | 5.0 | 5.4 |
| Lysozyme (100 µg/g) + nisin (100 i.u./g) | 2.8 | 2.5 |

Liver pate was well mixed with a culture of *L. monocytogenes* ATCC 19115, at about $10^3$/g, along with citric acid (1%) adjusted to pH 5.6, which was the pH of the pate, plus lysozyme and nisin as indicated.
This Example shows that growth of *Listeria monocytogenes* was completely inhibited in the pate containing the combination of lysozyme plus nisin plus citrate and further that spoilage micro-organisms such as lactic acid bacteria were also inhibited by the combination. The fact that the total bacteria numbers (e.g. 7.4 and 2.5) can be lower than the *Listeria* only numbers (7.7 and 2.8, respectively) is a consequence of the different methods of determination, which produces some variability in the results as is generally known in microbiology. Nevertheless the trend of obtaining decreased numbers when using the combination (nisin plus lysozyme plus citrate) is statistically valid.

Example 6

Prevention of growth and inactivation of *Listeria monocytogenes* and spoilage micro-organisms in cheese spread by lysozyme plus nisin in the presence of citrate.

| Additions | Bacterial count ($\log_{10}$ number/g) after incubation for 24 h at 30°C | |
|---|---|---|
| | *Listeria monocytogenes* | Total bacteria |
| Control = no addition | 2.9 | 3.5[+] |
| Lysozyme (100 $\mu$g/g) | 2.6 | 5.5[+] |
| Nisin (100 i.u./g) | 3.2 | 5.4[+] |
| Lysozyme (100 $\mu$g/g) plus nisin (100 i.u./g) | nd* | 2.0 |

*No survivors detected          + Spoilage *Bacillus* species

Cheese spread was well mixed with a culture of *L. monocytogenes* ATCC 19115 at about $10^3$/g, along with citric acid (1%) adjusted to pH 5.0, which was the pH of the cheese spread, plus lysozyme and nisin as indicated.

This Example shows that only the combination (lysozyme plus nisin plus citric acid) inactivated the *L. monocytogenes* that had been added. The combination also prevented growth of the spoilage *Bacillus* species.

Example 7

Inactivation of *Listeria monocytogenes* and inhibition of spoilage lactic acid bacteria on the surface of sliced ham by dipping in lysozyme-nisin-citric acid solution

| Dipping solution | Bacterial count ($\log_{10}$ numbers/g) after incubation at 10°C for .. hours | | |
|---|---|---|---|
| | 0 (immediately after dipping) | 24 | 48 |
| **-a-** *Listeria monocytogenes* ATCC 19115: | | | |
| Citric acid (1%) | 3.7 | 4.8 | 5.6 |
| Citric acid (1%) + lysozyme (500 $\mu$g/ml) + nisin (500 i.u./ml) | 2.0 | nd* | nd* |
| | | *No survivors detected | |
| **-b-** Lactic acid bacteria | | | |
| Citric acid (1%) | 2.5 | 5.4 | 7.3 (spoilage) |
| Citric acid (1%) + lysozyme (500 $\mu$g/ml) + nisin (500 i.u./ml) | 2.6 | 3.4 | 6.0 |

Slices of ham were inoculated on the surface with **Listeria monocytogenes** ATCC 19115 at a level of about $10^4$ per g, then dipped into the solutions as indicated and immediately vacuum-packed in plastic packs and incubated at 10°C.

This Example shows that the lysozyme-nisin-citrate combination brought about an immediate reduction in the **Listeria** $\log_{10}$ count from about 3.7 to 2.0 per g, and then inactivated the survivors within the next 24 hours. Lactic acid bacteria were not immediately inactivated, but their subsequent growth at 10°C was delayed.

**Claims**

1. Composition having improved antibacterial properties, which comprises a mixture of at least one representative of each of the following groups of compounds
   (1) a cell wall lysing substance or its salts,
   (2) an antibacterial compound, and
   (3) an adjuvant selected from the group consisting of organic acids acceptable for use in food products or preparations for cosmetic use or personal hygiene or salts of these acids, phosphates and condensed phosphates or the corresponding acids, and other sequestering agents.

2. Composition according to claim 1, in which the cell wall lysing substance (1) is lysozyme or a salt thereof.

3. Composition according to claim 1, in which the antibacterial compound (2) is a bacteriocin selected from the group consisting of nisin, pediocin and mixtures thereof.

11

4. Composition according to claim 1, in which the adjuvant (3) is selected from the group consisting of
   (3.1) acetic acid, citric acid, lactic acid, propionic acid and tartaric acid, or salts thereof;
   (3.2) orthophosphates, hexametaphosphates, tripolyphosphates and other polyphosphates, or the corresponding acids;
   (3.3) sequestering agents containing substituted or non-substituted amino groups, and any mixture thereof.

5. Composition according to claim 1, in which the ratio of compounds (1) : (2) : (3) is in the range of from 5 to 2000 mg of (1) : from $5 \times 10^3$ to $5 \times 10^6$ i.u. of nisin equivalent of (2) : from 0.5 to 100 gram of (3).

6. Composition according to claim 5, in which the ratio of compounds (1) : (2) : (3) is in the range of from 50 to 1000 mg of lysozyme or salt thereof : from $5 \times 10^4$ to $1 \times 10^6$ i.u. of nisin or equivalent thereof : from 5 to 20 gram of citric acid or salt thereof.

7. Process for improving the suppression of growth of micro-organisms in various products and/or the safety of such products, in particular for combatting contamination with *Listeria* bacteria, in which process an effective amount of a composition as claimed in claim 1 is incorporated into the product.

8. Process according to claim 7, in which the composition contains lysozyme or a salt thereof as compound (1) and the amount of the composition incorporated into the product is such, that the amount of lysozyme or a salt thereof in the product is in the range of 5 to 2000 mg/kg based on the total weight of the product or in the range of 10 to 200 mg/kg calculated on the total aqueous phase of the product.

9. Process according to claim 7, in which the composition contains a bacteriocin as compound (2), e.g. nisin or pediocin or a mixture thereof, and the amount of the composition incorporated into the product is such, that the amount of bacteriocin in the product is equivalent to the range of 5 to 5000 international units per gram of the total product.

10. Process according to claim 7, in which the composition contains an adjuvant (3) selected from the group consisting of (3.1) acetic acid, citric acid, lactic acid, propionic acid and tartaric acid, or salts thereof; (3.2) orthophosphates, hexametaphosphates, tripolyphosphates and other polyphosphates, or the corresponding acids; and (3.3) sequestering agents containing substituted or non-substituted amino groups.

11. Process according to claim 10, in which the amount of the composition incorporated into the product is such that the amount of adjuvant is in the range of 0.05 - 10% by weight of the total product.

12. Process according to claim 10, in which the adjuvant is EDTA or a salt thereof and the amount of the composition incorporated into the product is such that the amount of EDTA or salt thereof is in the range of 0.05 - 0.5% by weight of the total product.

13. Process according to claim 10, in which the adjuvant is a phosphate or condensed phosphate or the corresponding acid and the amount of the composition incorporated into the product is such that the amount of phosphate or condensed phosphate or of the corresponding acid is in the range of 0.1 - 5% by weight of the total product.

14. Process according to claim 10, in which the adjuvant is citric acid or a salt thereof and the amount of the composition incorporated into the product is such that the amount of citric acid or a salt thereof is in the range of 0.05 - 5% by weight of the total product.

15. Process according to claim 7, in which the pH of the product is at least 4 and preferably at most 10.

16. Process according to claim 15, in which the product has a pH of not more than 7.5.

17. Process according to claim 7, in which the product is a food product.

18. Process according to claim 17, in which, in addition to the incorporation of a composition according to claim 1, the food product is subjected to a special temperature treatment in order to destabilize any

EP 0 466 244 A1

*Listeria* bacteria present.

19. Process according to claim 18, in which the food product is subjected to at least one freeze/thaw cycle.

20. Process according to claim 18, in which the food product is heated to a temperature in the range of 40 - 90 ° C before storage at a temperature between ambient temperature and minus 30 ° C.

21. Process according to claim 18, in which the food product, after being subjected to said special temperature treatment, is stored below 0 ° C.

22. Process for treating equipment for handling or processing food products, animal feedstuffs, cosmetic products, or pharmaceutical products, in which process the equipment is contacted with a composition according to claim 1, before, during or after the handling or processing of the products to be protected against *Listeria* contamination.

23. Process for improving the safety of packed products, in particular for combatting contamination with *Listeria* bacteria, in which at least part of the packaging material is contacted with a composition according to claim 1.

24. Process according to claim 23, in which the packaging material is a container to be closed with a lid, and the lid for the container is contacted with the composition shortly before closing the container filled with the product to be protected against *Listeria* contamination.

25. Product in which the suppression of growth of micro-organisms and/or its safety, in particular protection against contamination with *Listeria* bacteria, is improved, which product is obtainable by a process as claimed in claim 7, and which product comprises a combination of effective amounts of at least one representative of each of groups (1), (2) and (3):
    (1) a cell wall lysing substance or its salts,
    (2) an antibacterial compound, and
    (3) an adjuvant selected from the group consisting of organic acids acceptable for use in foods or preparations for cosmetic use or personal hygiene or salts thereof, phosphates and condensed phosphates or the corresponding acids, and other sequestering agents.

26. Product according to claim 25, containing
    (1) from 5 to 2000 mg cell wall lysing substance per kg of product,
    (2) from 5 to 5000 international units of nisin or the equivalent thereof per gram of product, and
    (3) from 0.05 to 10% by weight of the total product of adjuvant.

27. Product according to claim 25, containing
    (1) from 10 to 200 mg cell wall lysing substance per kg of total aqueous phase of the product,
    (2) from 50 to 1000 international units of nisin, or the equivalent thereof, per gram of product, and
    (3) from 0.05 to 3% by weight of the total product of adjuvant.

13

European
Patent Office

EUROPEAN SEARCH
REPORT

Application Number

EP 91 20 1682

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | WORLD PATENTS INDEX LATEST Derwent Publications Ltd., London, GB; AN 87-242502 & ZA-A-8 607 738 (CHEM. SERVICES LTD) 13 April 1987 * abstract * * | 1,2,7,8, 17,22,25 | A 23 L 3/3571 A 23 B 4/22 A 23 C 19/06 |
| Y,D | EP-A-0 374 823   (MILES INC.) * the whole document * * | 1-12, 14-18,20, 22-27 | |
| Y,D | EP-A-0 265 884   (S.P.A. SOCIETA PRODOTTI ANTI-BIOTICI) * page 4, line 6 - line 34; claims; examples 5,10 * * | 1-12, 14-18,20, 22-27 | |
| X,P,D | EP-A-0 384 319   (VISKASE CORP.) * page 4, line 58 - page 6, line 32 * * * page 8, line 9 - line 19 * * * page 9, line 37 - line 47; claims; examples * * | 1-4,7,9, 10-18, 22-25 | |
| X,P | EP-A-0 427 912   (HAARMANN & REIMER CORP.) * page 4, line 6 - page 5, line 16; claims; figure 1; examples 2,6,7 * * | 1-3,7-10, 13,15-17, 22,25 | |
| D,A | DE-A-3 704 004   (HOECHST AG) | | TECHNICAL FIELDS SEARCHED (Int. Cl.5) A 23 L |

The present search report has been drawn up for all claims

| Place of search | Date of completion of search | Examiner |
|---|---|---|
| The Hague | 24 October 91 | LEPRETRE F.G.M.J. |